# EUROPÄISCHE PATENTSCHRIFT

(11) **EP 1 358 093 B1**
(45) Veröffentlichungstag und Bekanntmachung des Hinweises auf die Patenterteilung: **18.08.2004**
(21) Anmeldenummer: 01984712.8
(22) Anmeldetag: 14.12.2001
(51) Int. Cl.: B60R 21/01

(54) **VERFAHREN ZUR SEITENAUFPRALLSENSIERUNG IN EINEM FAHRZEUG**
METHOD FOR SENSING SIDE IMPACTS IN A VEHICLE
PROCEDE DE DETECTION DE COLLISION LATERALE DANS UN VEHICULE

(30) Priorität: 27.01.2001 DE 10103661
(43) Veröffentlichungstag der Anmeldung: 05.11.2003
(73) Patentinhaber: ROBERT BOSCH GMBH, 70442 Stuttgart (DE)
(72) Erfinder: GROTENDIEK, Torsten, 74321 Bietigheim-Bissingen (DE); ROELLEKE, Michael, 71229 Leonberg (DE); KOCHER, Pascal, 70839 Gerlingen (DE)
(86) Internationale Anmeldenummer: PCT/DE2001/004761
(87) Internationale Veröffentlichungsnummer: WO 2002/058968

(56) Entgegenhaltungen:
- WO-A-02/14113
- DE-A- 3 924 507
- DE-A- 10 108 849
- DE-C- 19 806 836

## Beschreibung

### Stand der Technik

Die Erfindung geht aus von einem Verfahren zur Seitenaufprallsensierung in einem Fahrzeug nach der Gattung des unabhängigen Patentanspruchs.

Zur Seitenaufprallsensierung werden Beschleunigungsmessungen verwendet. Dabei werden insbesondere ausgelagerte Beschleunigungssensoren (Peripheral Acceleration Sensors = PAS) dezentral eingebaut. Sie sind räumlich näher zum Objektaufprallort angebracht, um Signalverzögerungen und - abschwächungen auszugleichen. Typische Einbauorte sind am Türschweller, auf dem Sitzquerträger oder an der B-Säule.

Ein Verfahren zur Seitenaufprallsensierung gemäß dem Oberbegriff des Anspruch 1 ist z.B aus der DE-198 06 836 C1 bekannt.

### Vorteile der Erfindung

Das erfindungsgemäße Verfahren zur Seitenaufprallsensierung in einem Fahrzeug mit den Merkmalen des unabhängigen Patentanspruchs hat demgegenüber den Vorteil, daß die Signale von den Beschleunigungen links und rechts des Fahrzeugs von dem Steuergerät intelligent kombiniert werden. Damit wird nur noch ein Signal verarbeitet, um einen Seitenaufprall zu detektieren, so daß der Rechenaufwand für zwei Signale überflüssig wird. Die Fahrzeugschwingungen, die bei harten Fahrmanövern, den sogenannten Misuses, auftreten, zeigen dabei keine Seitenbewegungen. Der Abstand zu den Auslösesignalen wird dann größer. Hier wird insbesondere der Effekt der Fahrzeugbewegung bei einem Seitenaufprall ausgenutzt. Die Seitenbewegung läßt sich an allen y-Beschleunigungssensoren, also die die Seitenbewegung detektieren, feststellen und wird durch die Intrusion bei einem Seitenaufprall an der entsprechenden Seite überlagert. Auf der abgewandten Seite und in dem Steuergerät ist die Bewegung des Fahrzeugs und ein gefiltertes Intrusionssignal sichtbar. Somit erfolgt durch die Zusammenführung eine Erhöhung der Auslösesicherheit zu Nichtauslösern.

Durch die in den abhängigen Ansprüchen aufgeführten Maßnahmen und Weiterbildungen sind vorteilhafte Verbesserungen des im unabhängigen Patentanspruch angegebenen Verfahrens zur Seitenaufprallsensierung in einem Fahrzeug möglich.

Besonders vorteilhaft ist, daß das Differenzbeschleunigungssignal vor der Bildung der Schwelle gefiltert wird, um insbesondere Signale, die eine Auslösung bei einer Nichtauslösesituation hervorrufen würden, also den sogenannten Misuse zu vermeiden.

Schließlich ist es auch von Vorteil, daß eine Vorrichtung zur Seitenaufprallsensierung zur Durchführung des Verfahrens vorliegt und die entsprechenden Beschleunigungssensoren sowie das Steuergerät aufweist.

### Zeichnung

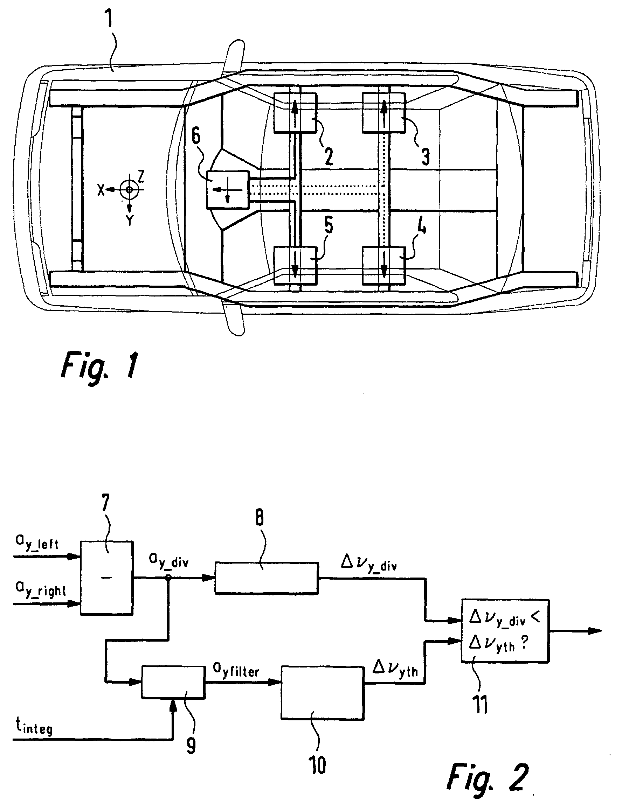

Ausführungsbeispiele der Erfindung sind in der Zeichnung dargestellt und werden in der nachfolgenden Beschreibung näher erläutert. Es zeigt Figur 1 eine Aufsicht auf die erfindungsgemäße Vorrichtung und Figur 2 ein Blockdiagramm, das das erfindungsgemäße Verfahren illustriert.

### Beschreibung

Die Seitenaufprallsensierung ist durch die kurze Deformationszone bei einem Seitenaufprall zwischen Insasse und Aufprallobjekt besonders kritisch, und dennoch müssen vor allem hier Fehlauslöser vermieden werden.

Erfindungsgemäß werden hier Seitenaufprallsituationen durch Beschleunigungssensoren erkannt, wobei die Beschleunigungssignale von den Beschleunigungssensoren auf der rechten und auf der linken Fahrzeugseite voneinander abgezogen werden, um ein Differenzbeschleunigungssignal zu bilden. Anhand des Differenzbeschleunigungssignals wird durch Integration ein Differenzgeschwindigkeitssignal bestimmt und die Auslöseschwelle wird in Abhängigkeit von dem Differenzbeschleunigungssignal gebildet. Liegt nun das Differenzgeschwindigkeitssignal über der Schwelle, dann ist ein Seitenaufprall erkannt, und Rückhaltemittel können gegebenenfalls ausgelöst werden, liegt es darunter, so liegt kein Seitenaufprall vor, der die Auslösung von Rückhaltemitteln erfordert.

Figur 1 zeigt schematisch eine Aufsicht auf die erfindungsgemäße Vorrichtung in einem Fahrzeug. Ein Fahrzeug 1 weist am rechten Seitenteil ausgelagerte Beschleunigungssensoren 2 und 3 auf. Der Sensor 2 vorne ist hier am Sitzquerträger eingebaut. Weitere Einbauorte sind der Türschweller und die B-Säule. Der Sensor 3 hinten ist hier an der C-Säule montiert. Weitere Einbauorte sind der Türschweller und der Sitzquerträger. Die Sensoren 2 und 3 sind jeweils an Datenein-/ausgänge eines Steuergeräts 6 angeschlossen. Auch Sensoren 4 und 5, die ebenfalls Beschleunigungssensoren sind und sich an der linken Fahrzeugseite befinden und symmetrisch am Sitzquerträger und der C-Säule montiert sind, sind über Datenein-/ausgänge jeweils mit dem Steuergerät 6 verbunden. Die Verbindung kann beispielsweise über einen Bus erfolgen. Aber auch herkömmliche Zweidrahtleitungen sind hier möglich.

Die Beschleunigungssignale werden von den Beschleunigungssensoren 2 bis 5 zu dem Steuergerät 6 als digitale Daten übertragen. Dazu weisen die Sensoren 2 bis 5 jeweils einen Meßverstärker, eine Meßfilterung und einen Analog/Digitalwandler auf. Alternativ ist es möglich, daß beispielsweise die Analog/Digitalwandlung im Steuergerät 6 erfolgt, wobei dabei elektromagnetische Störsignale zu beachten sind.

Das Steuergerät 6 berechnet den Auslösealgorithmus in Abhängigkeit von den Signalen der Beschleunigungssensoren 2 bis 5. Zusätzlich weist das Steuergerät 6 selbst Beschleunigungssensoren für die x- und y-Richtung auf, um so eine Plausibilitätsüberprüfung der Beschleunigungssignale von den ausgelagerten Beschleunigungssensoren zu erhalten.

Figur 2 beschreibt nun diesen Auslösealgorithmus. Zwei Beschleunigungssignale a_{yleft} und a_{yright} werden im Block 7 voneinander abgezogen, so daß das Beschleunigungssignal a_{ydiv} entsteht. Dieses Differenzbeschleunigungssignal a_{ydiv} wird einerseits in Block 8 integriert, um das Differenzgeschwindigkeitssignal Δv_{ydiv} und andererseits gefiltert in Block 9, um das gefilterte Signal a_{yfilter} zu erzeugen. Die Filterung in Block 9 wird in Abhängigkeit von einer Integrationszeit t_{integ} durchgeführt. Anhand des gefilterten Beschleunigungssignals a_{yfilter} wird in Block 10 die Schwelle berechnet, mit der das Differenzbeschleunigungssignal Δv_{ydiv} verglichen wird. Die Schwelle wird dann mit Δv_{yth} bezeichnet und in Block 11 wird der Schwellwertvergleich vollzogen. Liegt das Differenzbeschleunigungssignal über dem Schwellwert Δv_{yth}, dann ist auf einen Auslösefall erkannt worden, und Rückhaltemittel werden in Abhängigkeit von der Insassenklassifizierung eingesetzt. Liegt das Differenzgeschwindigkeitssignal unter der Schwelle, dann liegt kein Auslösefall vor. Dieser Algorithmus wird dann permanent in Abhängigkeit von den Beschleunigungssignalen 2 bis 5 durchgeführt. Die Richtung des Seitenaufpralls wird beispielsweise im Steuergerät 6 durch die eigenen Beschleunigungssensoren für die y-Richtung erkannt. Dabei wird insbesondere das Vorzeichen des integrierten y-Bschleunigungssignal zur Richtungsbestimmung verwendet. Damit ist es dann möglich, die situationsgerechten Rückhaltemittel einzusetzen.

Die Filterung wird in zwei Stufen durchgeführt. Einerseits wird die Steigung des Beschleunigungssignals begrenzt, um harte Fahrmanöver, die Beschleunigungssignale mit sehr hohen Steigungen aufweisen, als Misuse zu eliminieren. Andererseits wird ein Gleichanteil von dem Beschleunigungsdifferenzsignal abgezogen, um die Schwelle nicht zu hoch werden zu lassen. Sowohl der Gleichanteil als auch die Steigungsbegrenzung werden zeitabhängig durchgeführt.

Die Wahl des einzusetzenden Algorithmus ist beliebig und nicht vom Verfahren abhängig. Die gegenüberliegenden Sensoren 2-5 sowie 3-4 bilden jeweils ein Paar und werden zusammengefaßt. Jedes Paar wird dann durch einen eigenen Algorithmus gemäß Fig. 2 bewertet. Somit ist es möglich, die Plausibilitätsbetrachtung bei den benachbarten Paaren oder in dem Steuergerät 6 zu erhalten.

## Patentansprüche

1. Verfahren zur Seitenaufprallsensierung in einem Fahrzeug (1), wobei wenigstens ein Beschleunigungssensor (2 - 5) auf jeder Seite des Fahrzeugs zur Seitenaufprallsensierung eingesetzt wird, wobei aus den Beschleunigungssignalen durch Differenzbildung ein Differenzbeschleunigungssignal erzeugt wird, wobei das Differenzbeschleunigungssignal zu einem Differenzgeschwindigkeitssignal integriert oder aufsummiert wird und wobei zur Seitenaufprallsensierung das Differenzgeschwindigkeitssignal mit einer Schwelle verglichen wird, **dadurch gekennzeichnet, dass** die Schwelle in Abhängigkeit von dem Differenzbeschleunigungssignal gebildet wird und dass das Differenzbeschleunigungssignal vor der Bildung der Schwelle gefiltert wird.

## Claims

1. Method for sensing side impacts in a vehicle (1), at least one acceleration sensor (2-5) being used on each side of the vehicle for sensing side impacts, a differential acceleration signal being generated from the acceleration signals by forming differences, the differential acceleration signal being integrated or summed to form a differential speed signal and the differential speed signal being compared with a threshold in order to sense side impacts, **characterized in that** the threshold is formed as a function of the differential acceleration signal, and **in that** the differential acceleration signal is filtered before the threshold is formed.

## Revendications

1. Procédé de détection de collision latérale d'un véhicule (1) selon lequel : au moins un capteur d'accélération (2 - 5) est prévu de chaque côté du véhicule pour détecter une collision latérale ;
à partir des signaux d'accélération, en formant la différence on génère un signal d'accélération différentiel qui est intégré ou additionné pour donner un signal de différence de vitesse, et
pour la détection d'une collision latérale, on compare le signal de différence de vitesse à un seuil,
**caractérisé en ce qu'**
on forme le seuil en fonction du signal différentiel d'accélération, et
on filtre le signal différentiel d'accélération avant de former le seuil.
